# EUROPÄISCHE PATENTSCHRIFT

(11) **EP 0 794 035 B1**
(45) Veröffentlichungstag und Bekanntmachung des Hinweises auf die Patenterteilung: **17.10.2001**
(21) Anmeldenummer: 97100815.6
(22) Anmeldetag: 20.01.1997
(51) Int. Cl.: B23Q 17/00, G01B 13/12

(54) **Vorrichtung für eine pneumatische Auflagekontrolle insbesondere eines Werkstückes**
Device for the automatic support control of a workpiece
Dispositif de contrôle automtique du support d'une pièce à usiner

(30) Priorität: 07.03.1996 DE 19608879
(43) Veröffentlichungstag der Anmeldung: 10.09.1997
(73) Patentinhaber: Bayerische Motoren Werke Aktiengesellschaft, 80788 München (DE)
(72) Erfinder: Niedereder, Werner, 4400 Steyr (AT)

(56) Entgegenhaltungen:
- EP-A- 0 380 967
- DE-A- 4 232 630
- DE-A- 4 333 916
- DE-A- 4 344 264
- DE-B- 1 205 711
- US-A- 3 482 433
- US-A- 3 863 493
- PATENT ABSTRACTS OF JAPAN vol. 96, no. 1, 31.Januar 1996 & JP 07 237089 A (HITACHI SEIKO LTD), 12.September 1995,

## Beschreibung

Die Erfindung bezieht sich auf eine Vorrichtung für eine pneumatische Auflagekontrolle insbesondere eines Werkstückes gemäß den im Oberbegriff des Patentanspruches 1 angegebenen Merkmalen.

In Fertigungsanlagen mit einer Bearbeitungsstation automatisch zugeführten Werkstücken dient eine derartige Vorrichtung dazu, bei Vorliegen eines eine vorbestimmte Größe überschreitenden Fremdkörpers zwischen einer Auflagefläche einer Spanneinrichtung und dem Werkstück dessen Fixierung in der Spanneinrichtung mittel- oder unmittelbar gesteuert zu unterlassen.

Hierfür sind bekannte Vorrichtungen,wie z.B. die gemäß der DE 42 326 30A1, mit einer oder mehreren in der Auflagefläche der Spanneinrichtung angeordneten und mit einer Druckquelle in Verbindung stehenden Düsen ausgerüstet, aus denen während einer Werkstückplazierung vorzugsweise Druckluftaustritt.

Bei einer fremdkörperfreien Plazierung des Werkstückes auf der Auflagefläche ist damit zugleich ein Verschluß der Düsen erreicht, in denen die Druckluft mit einem vorbestimmten Druck ansteht. Ein durch einen Fremdkörper zwischen Auflagefläche und Werkstück erzeugter Spalt bewirkt ein abströmen von Druckluft, wobei der dem jeweiligen Spaltmaß entsprechenden Leckage an Druckluft ein gegenüber dem bei verschlossenen Düsen geringerer Druckwert zugeordnet ist. Ein in der Vorrichtung vorgesehenes Meßgerat dient der Druckwert-Erfassung mit dem Ziel. bei Erreichen eines vorbestimmt niedrigen Druckwertes entsprechend einem großen Spalt ein Signal auszulösen zur mitteloder unmittelbaren Verhinderung der Fixierung des Werkstückes in der Spanneinrichtung.

Bekanntlich sind Meßgeräte in bestimmten Zeitabständen auf den jeweiligen Wert neu einzustellen bzw. zu justieren. Hierbei wird durch Anordnung einer Lehre zwischen Auflagefläche und Werkstück ein Prüfspalt von vorbestimmt maximaler Größe erzeugt, wobei der mit der Leckage aus diesem Spalt gegebene Referenzdruck der Einstellung bzw. der Justierung des Meßgerätes zur Signalansteuerung bzw. Signalauslösung dient.

Nachteilig hierbei ist, daß zur Justierung des Meßgerätes der in der Fertigungsanlage angeordnete Teil der Vorrichtung der pneumatischen Auflagekontrolle zu benutzen ist mit einem erheblichen Aufwand.

Der Erfindung liegt die Aufgabe zugrunde, eine Vorrichtung für eine pneumatische Auflagekontrolle der im Oberbegriff des Patentanspruches 1 beschriebenen Bauart derart weiterzubilden, daß ohne Benützung des fertigungsanlagenseitigen Teils der Vorrichtung eine Justierung erzielt ist.

Diese Aufgabe ist mit dem Patentanspruch 1 gelöst.

Zwar ist aus der DE 43 33 916 A1 ein pneumatisches Meßmittel zum Feststellen der Maßhaltigkeit von Werkstücken bekannt, bei dem jedoch eine gesteuert versorgte Abström-Düse mit verstellbarer Spaltplatte lediglich dazu dient, am zugehörigen Meßgerät einen Mittelwert zwischen einem Kleinst- und einem Größtwert einzustellen. Diesem Dokument ist kein Hinweis zu entnehmen, diese Einrichtung als einen Spaltleckage-Simulator in einer Vorrichtung für eine pneumatische Auflagekontrolle zu verwenden.

Der Vorteil der Erfindung ist eine vom fertigungsanlagenseitigen Teil der Vorrichtung gesondert durchführbare Justierung des Meßgerätes der Vorrichtung bzw. der Vorrichtung, wobei die Justierung mit einem dem Meßgerät vorteilhaft benachbart angeordneten Spaltleckage-Simulator in einfacher Weise von einer Bedienperson durchzuführen ist.

Die Verbindung eines Spaltleckage-Simulators mit der Druckquelle der Düsen sieht in vorteilhafter Weise bezüglich eines einfachen Aufbaus vor, daß der Simulator mit einer Zuführleitung der Düsen über ein Dreiwegeventil mit der Druckquelle verbindbar ist. wobei die Düsen inaktiv gesteuert sind.

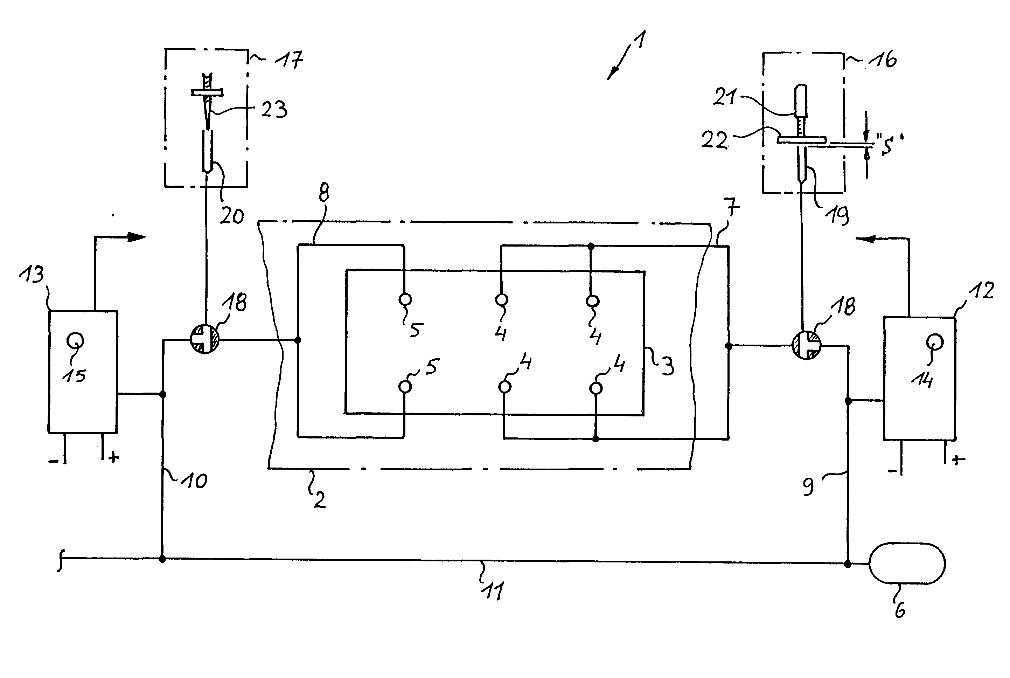

Die Erfindung ist anhand eines in der Zeichnung schematisch dargestellten Beispiels beschrieben.

Eine Vorrichtung 1 für eine pneumatische Auflagekontrolle eines nicht gezeigten Werkstückes in einer lediglich schematisch angedeuteten Fertigungsanlage 2. umfaßt in einer Auflagefläche 3 einer nicht weiter dargestellten Spanneinrichtung angeordnete Düsen 4,5, die jeweils mit einer Druckluftquelle 6 in Verbindung stehen mit dem Ziel, daß während einer Werkstückplazierung über die Düsen 4, 5 Druckluft abströmt. Die Düsen 4,5 sind entsprechend der Auflagekontrolle für ein kürzeres oder längeres Werkstück über gesonderte Leitungskreise 7,8 mit gesonderten Zuführleitungen 9,10 an eine Versorgungsleitung 11 der Druckquelle 6 angeschlossen.

Weiter umfaßt die Vorrichtung 1 für jeden Leitungskreis 7.8 ein Meßgerät 12, 13, das der Erfassung einer Leckage bei einem durch Fremdkörper zwischen der Aufiagefläche 3 und dem jeweiligen Werkstück bewirkten Spalt dient Erreicht der Spalt eine vorbestimmt unzulässige Größe, dient ein mit dieser Leckage verbundener Druckwert der Auslösung bzw. Ansteuerung eines Signals, z.B. auch eines optischen Signals 14 bzw. 15, mit dem mittel- oder unmittelbar eine Aktivierung der Spanneinrichtung zum fixieren des Werkstükkes auf der Auflagefläche 3 unterbindbar bzw. unterbunden ist.

Die beispielsweise mit einem Druck/Spannungswandler ausgerüsteten Meßgeräte 12,13 sind in vorbestimmten Zeitabständen auf ihre Einstellung zu überprüfen und gegebenenfalls neu zu justieren. Um hierbei ohne Benützung des fertigungsanlagenseitigen Teils der Vorrichtung 1 im Umfang der Auflagenfläche 3 mit durch eine Lehre über einen Prüfspalt beabstandeten Werkstück eine mindestens gleichwertige Justierung mit wesentlich geringerem Aufwand zu erreichen, ist jedem Meßgerät 12 bzw. 13 der Vorrichtung 1 ein von der Spanneinrichtung enffernt angeordneter, mit der jeweiligen Zuführleitung 9 bzw. 10 gesondert verbindbarer Spaltleckage-Simulator 16,17 zugeordnet. Jeder Simulator 16,17 arbeitet in analoger Weise zu den Düsen 4,5 derart. daß über eine steuerbare Abströmung des Druckmediums bzw. der Druckluft einstellbare Druckwerte einer Justierung des jeweiligen Meßgerätes 12,13 für eine jeweilige Signalansteuerung bzw. Signalauslösung dienen.

Wie aus der Zeichnung ersichtlich, sind die Simulatoren 16,17 für eine Justierung der Meßgeräte 12,13 jeweils über ein Dreiwegeventil 18 in der jeweiligen Zuführleitung 9,10 mit der Druckluftquelle 6 verbunden, wobei mit der gezeigten Stellung der beiden Dreiwegeventile 18 die beiden Gruppen von Düsen 4 und 5 inaktiv gesteuert sind.

Die im Aufbau unterschiedlichen, aber jeweils nach dem Spaltprinzip wirksamen Simulatoren 16 und 17 weisen vorzugsweise jeweils eine gesonderte, mit den Düsen 4,5 der Vorrichtung 1 identische Düse 19, 20 auf.

Der Düse 19 des Simulators 16 ist eine mittels eines Mikrometer-Triebes 21 verstellbare Spaltplatte 22 zugeordnet, wobei der Mikrometer-Trieb 21 mit einer den jeweiligen Spalt "S" zwischen der Mündung der Düse 19 und der Spaltplatte 22 anzeigenden Skala ausgerüstet ist.

Dem gegenüber ist der Simulator 17 als eine verstellbare Drossel gestaltet mit einem der Düse 20 zugeordneten Drosselkegel 23.

Die erfindungsgemäße Vorrichtung kann auch als Anlagekontrolle für ein Werkstück oder ein Werkzeug dienen.

## Patentansprüche

1. Verfahren zur pneumatischen Auflagekontrolle insbesondere eines Werkstückes,
- bei dem mittels einer in einer Auflagefläche (3) einer Spanneinrichtung angeordneten, mit einer Druckquelle (6) verbindbaren Düse (4, 5) während der Werkstückplatzierung ein Druckmedium abgegeben wird, und
- mittels eines Meßgerätes (12, 13) die Leckage bei einem durch Fremdkörper zwischen Auflagefläche (3) und Werkstück bewirkten Spalt erfaßt wird, wobei
- über einen einer vorbestimmt unzulässigen Spaltgröße entsprechenden Druckwert ein einer Aktivierung der Spanneinrichtung entgegenstehendes Signal bewirkt ist,
**dadurch gekennzeichnet,**
- daß die Auflagekontroll-Düsen (4, 5) gegenüber einer Druckquelle (6) inaktiv gesteuert werden und das Druckmedium gesteuert einer als Spaltleckage-Simulator dienenden Abström-Düse (19, 20) mit verstell- und fixierbar zugeordneten Spaltplatte (22) oder einem Drosselkegel (23) zugeführt wird, wobei
- mittels der relativ zur Abström-Düse (19, 20) verstellbaren Spaltplatte (22) bzw. des Drosselkegels (23) ein einem vorbestimmten Spalt zwischen der Auflagefläche (3) der Spanneinrichtung und einem Werkstück entsprechender Spalt "S" zur Justierung des von der Spanneinrichtung entfernt angeordneten Meßgerätes (12, 13) einejeweilige Signalansteuerung eingestellt bzw. simuliert wird.

2. Verfahren nach Anspruch 1, **dadurch gekennzeichnet,**
- daß die Spaltplatte (22) mit einem Mikrometer-Trieb (21) betätigt wird, dem
- eine die jeweilige Spaltgröße anzeigende Skala zugeordnet ist.

3. Verfahren nach Anspruch 1 oder 2, **dadurch gekennzeichnet, daß** der Spaltleckage-Simulator (16, 17) mit einer Zuführleitung (9, 10) der Düsen (4, 5) über ein Dreiwegeventil (18) mit der Druckquelle (6) verbunden wird, wobei die Düsen (4, 5) inaktiv gesteuert sind.

## Claims

1. A method of pneumatic support monitoring, particularly of a workpiece,
- wherein during positioning of the workpiece, a pressure medium is delivered by a nozzle (4, 5) connectable to the pressure source (6) and disposed on a support surface (3) of a clamping device and,
- a measuring device (12, 13) detects the leakage from a gap produced by foreign bodies between the support surface (3) and the workpiece, wherein
- when the pressure goes beyond that corresponding to a predetermined unacceptable gap size, a signal is given to counteract activation of the clamping device,
**characterised in that**
- the support-monitoring nozzles (4, 5) are inactively controlled relative to a pressure source (6) and the pressure medium is supplied in controlled manner to an outflow nozzle (19, 20) serving as a gap-leakage simulator and comprising an adjustable, fixable gap plate (22) or a throttle cone (23), wherein
- by means of the gap plate (22) or throttle cone (23) adjustable relative to the outflow nozzle (19, 20), a gap "S" corresponding to a predetermined gap between a workpiece and the support surface (3) of the clamping device is adjusted or simulated in order to adjust the measuring device (12, 13) disposed at a distance from the clamping device [in order to] actuate a respective signal.

2. A method according to claim 1, **characterised in that**
- the gap plate (22) is operated by a micrometer drive (21),
- associated with a scale indicating the size of the respective gap.

3. A method according to claim 1 or 2, **characterised in that** the gap leakage simulator (16, 17) is connected by a feed line (9, 10) of the nozzles (4, 5) via a three-way valve (18) to the pressure source (6), the nozzles (4, 5) being inactively controlled.

## Revendications

1. Procédé de contrôle pneumatique d'appui d'une pièce à usiner, selon lequel :
- pendant la mise en place de la pièce, une buse (4, 5) montée sur une portée d'appui (3) d'un dispositif de serrage et reliée à une source de pression (6) délivre un fluide sous pression,
- un appareil de mesure (12, 13) détecte la fuite à travers une fente créée par un corps étranger entre la portée d'appui (3) et la pièce, et
- quand une valeur de pression correspondant à une grandeur inadmissible de fente est dépassée, un signal s'opposant à l'activation du dispositif de serrage est émis,
**caractérisé en ce que**
- les buses de contrôle d'appui (4, 5) sont commandées de manière à ne pas être alimentées par la source de pression (6) et le fluide de pression est envoyé par commande à une buse d'écoulement (19, 20) jouant le rôle de simulateur de fuite par fente, équipé d'une plaque à fente (22) associée, réglable et fixable, ou d'un cône d'étranglement (23),
- par l'intermédiaire de la plaque à fente réglable par rapport à la buse d'écoulement (19, 20) ou d'un cône d'étranglement (23), une commande de signal règle et ou simule une fente « S » correspondant à une fente prédéfinie entre la portée d'appui (3) du dispositif de serrage et une pièce, et servant à ajuster l'appareil de mesure (12, 13) éloigné du dispositif de serrage.

2. Procédé selon la revendication 1,
**caractérisé en ce que**
la plaque à fente (22) est actionnée par un entraîneur micrométrique (21) auquel est associée une échelle graduée indiquant la dimension de la fente correspondante.

3. Procédé selon la revendication 1 ou 2,
**caractérisé en ce que**
le simulateur de fuite à fente (16, 17) est relié à la source de pression (6) par une conduite (9, 10) alimentant les buses (4, 5), à travers une soupape à trois voies (18), la commande rendant les buses (4, 5) inactives.
